# EUROPÄISCHE PATENTSCHRIFT

(11) **EP 0 833 099 B1**
(45) Veröffentlichungstag und Bekanntmachung des Hinweises auf die Patenterteilung: **10.01.2001**
(21) Anmeldenummer: 97116310.0
(22) Anmeldetag: 19.09.1997
(51) Int. Cl.: B60Q 1/115, F21V 7/00

(54) **Fahrzeugscheinwerfer**
Vehicle headlamp
Projecteur pour véhicule automobile

(30) Priorität: 26.09.1996 DE 19639494
(43) Veröffentlichungstag der Anmeldung: 01.04.1998
(73) Patentinhaber: Hella KG Hueck & Co., 59552 Lippstadt (DE)
(72) Erfinder: Eichhorn, Karsten, Dr., 59320 Ennigerloh (DE); Tietz, Holm, 59556 Lippstadt (DE); Lachmayer, Roland, 59505 Bad Sassendorf (DE); Plattfaut, Christian, 59558 Lippstadt (DE)

(56) Entgegenhaltungen:
- EP-A- 0 581 679
- DE-A- 3 808 086
- FR-A- 1 450 118
- US-A- 5 171 082

## Beschreibung

Die Erfindung betrifft einen Fahrzeugscheinwerfer mit einem Reflektor, der in vertikaler Richtung in einen oberen Bereich, einen mittleren Bereich und einen unteren Bereich aufgeteilt ist.

Ein solcher Fahrzeugscheinwerfer ist beispielsweise aus der DE 38 08 086 bekannt. Bei diesem Scheinwerfer wird die Aufteilung des Reflektors in drei Bereiche dazu genutzt, um die Lichtverteilung im horizontalen und vertikalen Bereich senkrecht zur Mittelachse des Scheinwerfers möglichst vollständig an eine gewünschte Lichtverteilung anzupassen. Dieser Fahrzeugscheinwerfer weist für die drei Bereiche ein gemeinsames Zentrum mit einer Durchstecköffnung für eine Glühlampe mit einer Glühwendel als Lichtquelle auf. Solche Fahrzeugscheinwerfer werden für Abblendlicht oder für abblendbares Fernlicht verwendet. Mit solchen Fahrzeugscheinwerfern ist es nicht möglich, zusätzlich Nebellicht zu erzeugen.

Zur Erzeugung von Nebellicht wird üblicherweise ein eigener Nebelscheinwerfer bzw. ein eigener separater Reflektor mit entsprechender Lampe verwendet. Der zusätzliche Scheinwerfer benötigt aber auch zusätzlichen Platz. Aus gestalterischen Gründen kann es jedoch erwünscht sein, daß das Abblendlicht, das Fernlicht und das Nebellicht auf kleinem Raum untergebracht werden.

Aufgabe der Erfindung ist es daher, einen multifunktionalen Scheinwerfer zur Erzeugung von Abblendlicht, Nebellicht und Fernlicht zu entwickeln.

Diese Aufgabe wird erfindungsgemäß dadurch gelöst, daß der obere Bereich als Abblendlichtfläche ausgebildet ist, die ein erstes Zentrum aufweist, durch das die Längsachse einer ersten Lampe verläuft, der mittlere Bereich als Nebellichtfläche und der untere Bereich als Fernlichtfläche ausgebildet ist, und daß die Nebellichtfläche und die Fernlichtfläche ein gemeinsames zweites Zentrum aufweisen, durch das die Längsachse einer zweiten Lampe verläuft.

Durch die Zuordnung der unterschiedlichen Bereiche zu zwei Zentren mit jeweils einer Lampe wird eine multifunktionale Verwendung des Fahrzeugscheinwerfers für Abblendlicht, Nebellicht und Fernlicht ermöglicht. Durch die Verwendung eines einzigen Reflektors für die drei grundsätzlichen Funktionen Abblendlicht, Fernlicht und Nebellicht ist der Platzbedarf relativ gering. Der Scheinwerfer ist beispielsweise als Scheinwerfer eines Scheinwerferpaares, z. B. eines PKW's oder als Zentralscheinwerfer eines zwei- oder dreirädrigen Fahrzeuges einsetzbar.

Nach einer bevorzugten Ausführungsform ist die erste Lampe als H7-Lampe mit einer Abblendlichtwendel zur Erzeugung einer Abblendlichtverteilung und die zweite Lampe als bekannte H4-Lampe, die eine Abblendlichtwendel sowie eine Fernlichtwendel aufweist, ausgebildet. Die Abblendlichtwendel der H4-Lampe wird dabei zur Erzeugung einer Nebellichtverteilung verwendet.

Gemäß einer weiteren bevorzugten Ausführungsform ist der Fahrzeugscheinwerfer bzw. der Reflektor kreisrund und um seine Mittelachse schwenkbar gelagert. Durch die schwenkbare Lagerung des Reflektors ist es möglich, bei Fahrzeugen mit einer seitlichen Neigung der Karosserie bei Kurvenfahrten den Scheinwerfer bzw. Reflektor neigungsabhängig zu verschwenken.

Nach einer weiteren bevorzugten Ausführungsform ist der Reflektor durch einen Elektromotor verschwenkbar, wobei der Elektromotor von einer mit einem Neigungssensor verbundenen Steuereinrichtung so gesteuert wird, daß bei seitlicher Neigung des Fahrzeuges der Reflektor seine horizontale Ausrichtung beibehält. Dadurch ist es möglich, trotz einer seitlichen Fahrzeugneigung eine unveränderte Lichtverteilung auf der Straße beizubehalten.

Weiteren Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1: eine dreidimensionale Darstellung eines eingebauten Scheinwerfers;
- Figur 2: eine vereinfachte Darstellung einer Vorderansicht eines Reflektors;

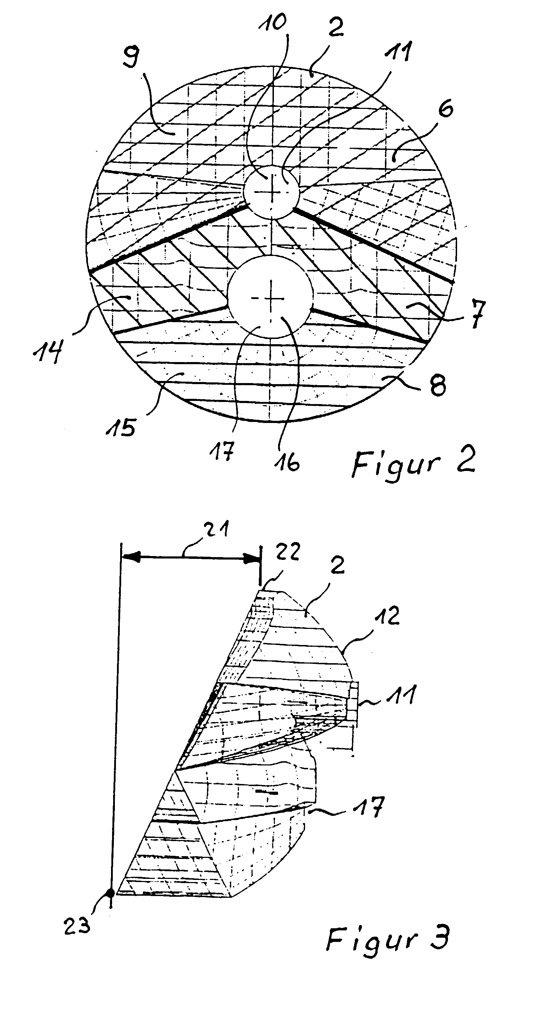

- Figur 3: eine vereinfachte Darstellung einer Seitenansicht des Reflektors von Figur 2;
- Figur 4: eine vereinfachte dreidimensionale Darstellung des Reflektors von Figur 2;
- Figur 5: eine Seitenansicht eines um eine Mittelachse durch einen Elektromotor schwenkbaren Reflektors in verkleinerter Darstellung mit einer schematisch dargestellten elektronischen Ansteuerung;

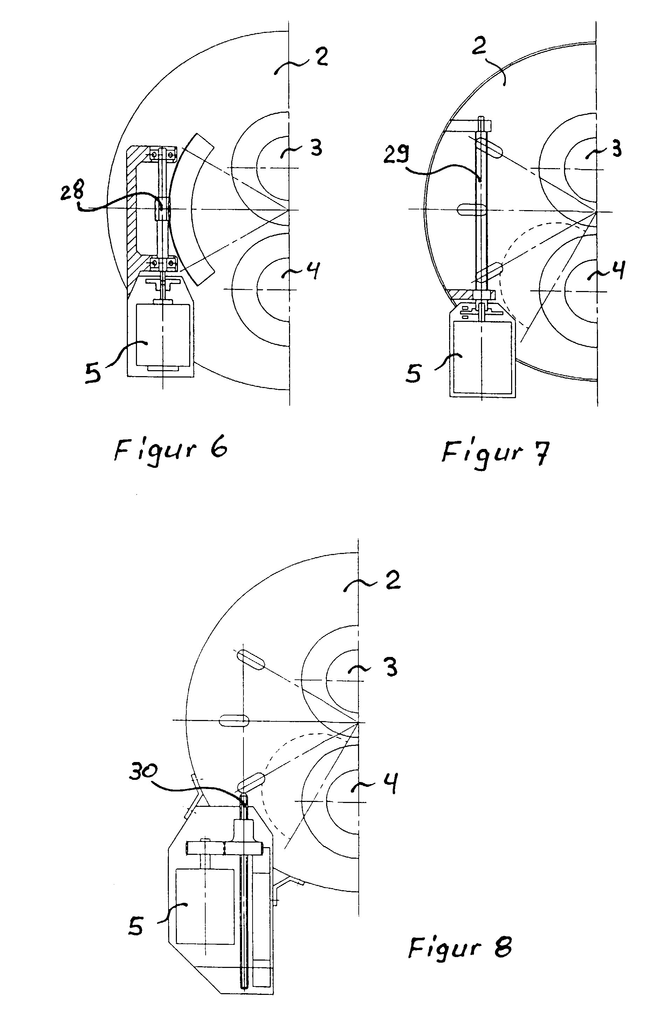

- Figur 6: eine Rückansicht eines durch einen Elektromotor mit Schneckengetriebe verschwenkbaren Reflektors;
- Figur 7: eine Rückansicht eines durch einen Elektromotor und eine Gewindestange verschwenkbaren Reflektors;
- Figur 8: eine Rückansicht eines durch einen Elektromotor und einen Steller mit translierender Stange verschwenkbaren Reflektors;
- Figur 9: eine Darstellung der Abblendlichverteilung auf einer 10 Meter entfernten Wand;
- Figur 10: eine Darstellung der Nebellichtverteilung auf der 10-Meter-Wand;
- Figur 11: eine Darstellung der Fernlichtverteilung auf der 10-Meter-Wand;
- Figur 12: eine Darstellung der Verteilung von Abblendlicht und aufgeschalteten Nebellicht und
- Figur 13: eine Darstellung der Lichtverteilung vom Abblendlicht und aufgeschaltetem Fernlicht.

Ein Fahrzeugscheinwerfer (1) besteht im wesentlichen aus einem Reflektor (2), einer ersten Lampe (3), einer zweiten Lampe (4) und einem Elektromotor (5).

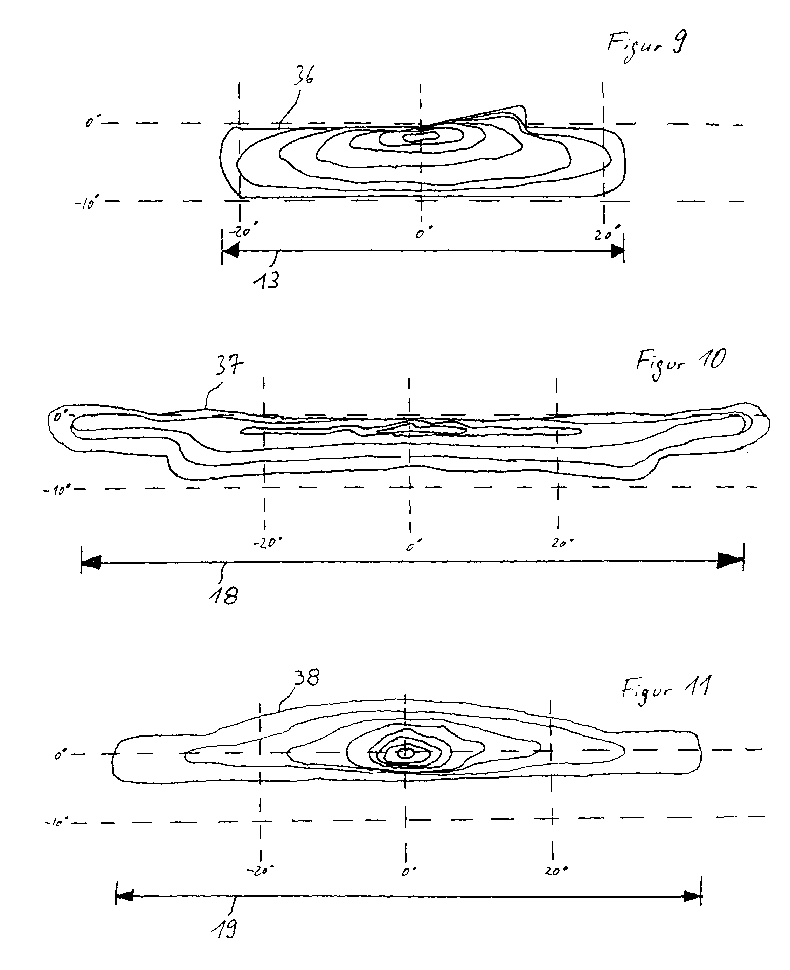

Der Reflektor (2) ist, wie aus Figur 2 zu ersehen ist, in vertikaler Richtung in einen oberen Bereich (6), einen mittleren Bereich (7) und einen unteren Bereich (8) aufgeteilt. Der obere Bereich (6) ist als eine Abblendlichtfläche (9) ausgebildet. Die Abblendlichtfläche (9) weist ein erstes Zentrum (10) mit einer ersten Durchstecköffnung (11) auf. Durch die erste Durchstecköffnung (11) kann von der Rückseite (12) des Reflektors (2) die erste Lampe (3) eingesetzt werden. Die Abblendlichtfläche (9) ist so ausgebildet, daß eine Abblendlichtverteilung (36) gemäß Figur 9 eine horizontale Streubreite (13) von etwa ± 20 bis 25 Grad aufweist. Durch die relativ geringe Streubreite (13) wird eine gute und homogene Vorfeldausleuchtung erzielt. Bei einer Verwendung als einzelner Zentralscheinwerfer ist das Maximum in der Beleuchtungsstärke aufgewertet und mittig plaziert. Im Bereich von ± 20 bis 25 Grad ist die Möglichkeit einer Anknüpfung einer Nebellichtverteilung (37) gegeben. Durch eine entsprechende Gestaltung der Abblendlichtfläche (9) kann aber auch eine asymmetrische Lichtverteilung erzielt werden.

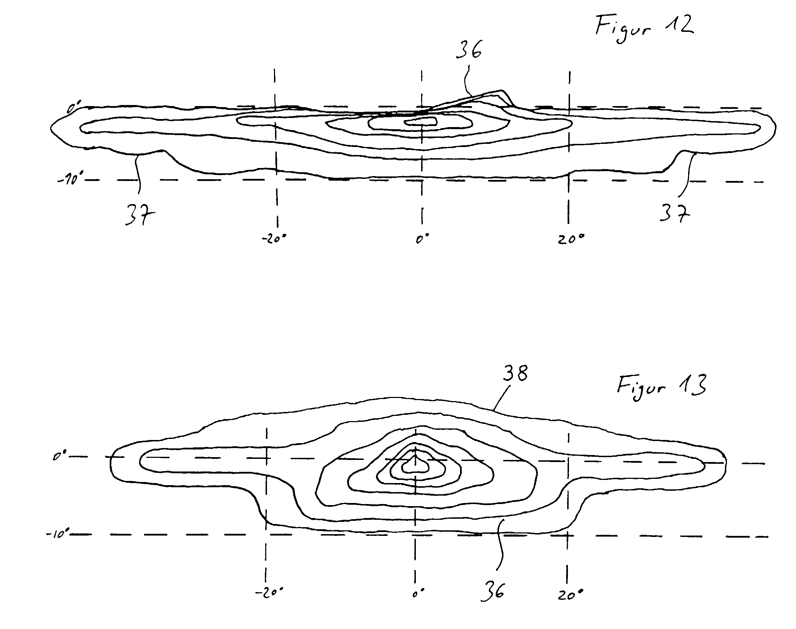

Der mittlere Bereich (7) ist als Nebellichtfläche (14) und der untere Bereich (8) ist als Fernlichtfläche (15) ausgebildet. Die Nebellichtfläche (14) und die Fernlichtfläche (15) weisen ein zweites Zentrum (16) mit einer zweiten Durchstecköffnung (17) auf. Die zweite Lampe (4) wird von der Rückseite (12) in die zweite Durchstecköffnung (17) des Reflektors (2) eingesteckt. Die Nebellichtfläche (14) ist so ausgebildet, daß das Nebellicht eine horizontale Streubreite (18) von etwa ± 45 bis 50 Grad aufweist, siehe Figur 10. Die Nebellichtverteilung (37) ist auf das Abblendlicht aufschaltbar und ergibt eine kombinierte Lichtverteilung, wie sie aus Figur 12 zu ersehen ist. Ein Anschluß an die Abblendlichtverteilung (36) ist im Bereich von ± 20 bis 25 Grad mit etwa 4 lx gewährleistet. Die Fernlichtfläche (15) ist so ausgebildet, daß eine Fernlichtverteilung (38) eine horizontale Streubreite (19) von etwa ± 35 bis 45 Grad aufweist, siehe Figur 11. Das Fernlicht besitzt ein zentrales, enges Maximum von in einem Bereich von etwa ± 5 Grad. Abgestimmt mit der Abblendlichtverteilung (36) ist die Fernlichtverteilung (38) auch als aufgeschaltetes Fernlicht mit einer in Figur 13 dargestellten kombinierten Lichtverteilung zu verwenden.

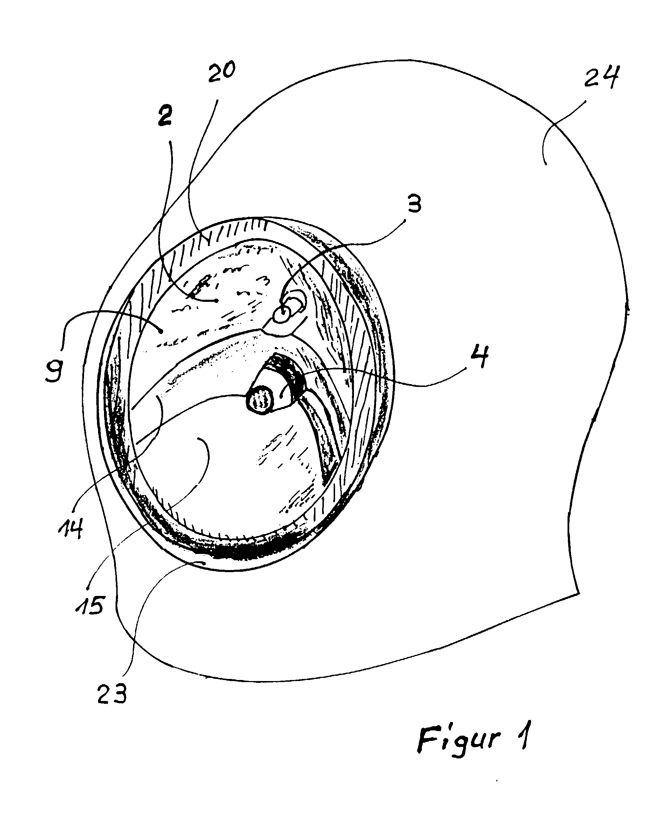

Figur 1 zeigt eine perspektivische Ansicht des Scheinwerfers (1). Die erste Lampe (3) ist als H7-Lampe mit einer Abblendlichtwendel ausgebildet. Die zweite Lampe (4) ist als eine H4-Lampe ausgebildet. Sie weist eine Abblendlichtwendel auf, die zur Erzeugung der Nebellichtverteilung (38) als Nebellichtwendel genutzt wird. Die zweite Lampe (4) weist weiterhin eine Fernlichtwendel zur Erzeugung des Fernlichtes auf. Die Längsachse der ersten Lampe (3) verläuft durch das erste Zentrum (10) bzw. die erste Durchstecköffnung (11) und die Längsachse der zweiten Lampe (4) verläuft durch das zweite Zentrum (16) bzw. die zweite Durchstecköffnung (17).

Der Fahrzeugscheinwerfer (1) bzw. der Reflektor (2) ist kreisrund und besitzt einen Durchmesser von ca. 170 mm. Die Lampen (3, 4) sind jeweils ca. 25 mm in vertikaler Richtung von der Mittelachse des Fahrzeugscheinwerfers (1) nach unten bzw. oben plaziert. Der Fahrzeugscheinwerfer (1) kommt mit einer optikfreien Streuscheibe (20) aus. Der Fahrzeugscheinwerfer erlaubt bei den genannten Abmessungen eine Einbautiefe (21) des Reflektors (2), d. h., einen Abstand von einer Vorderkante (22) des Reflektors (2) zu einer vorderen Fahrzeugkontur (23) einer Karosserie (24), von 70 mm ohne Licht- und Streuweiteeinbuße. Grundsätzlich sind auch andere Abmessungen in einem abgestimmten Verhältnis möglich.

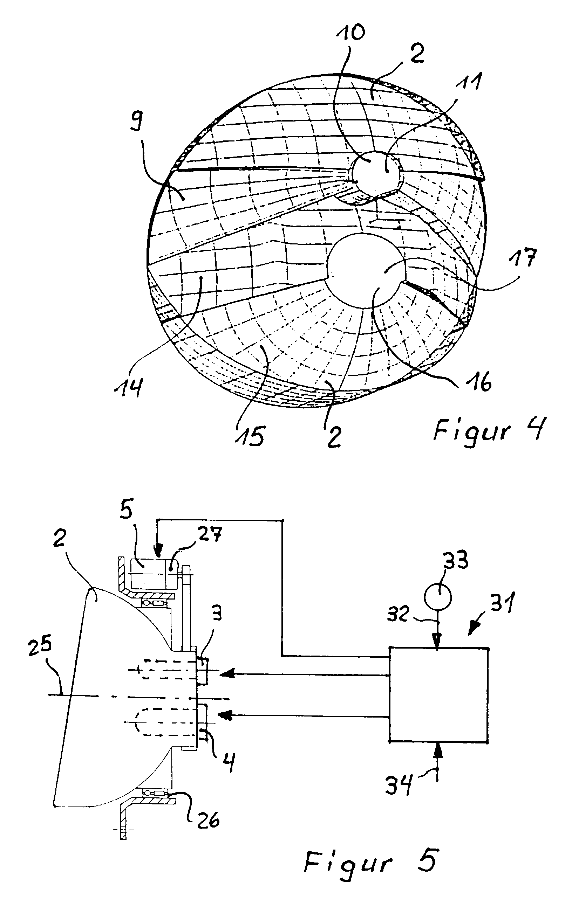

Wie in Figur 5 dargestellt ist, ist der Reflektor (2) um seine Mittelachse (25) schwenkbar über ein Lager (26) gelagert. Der Elektromotor (5) ist über ein Getriebe (27) mit dem Reflektor (2) verbunden und verschwenkt den Reflektor (2) in Abhängigkeit von einer seitlichen Neigung eines Fahrzeuges bzw. dessen Karosserie (24). Die Verbindung von Reflektor (2) und Elektromotor (5) kann beispielsweise über ein Schneckengetriebe (28), eine Gewindestange (29) oder einen Steller mit translierender Stange (30) hergestellt werden. Der Elektromotor kann beispielsweise als Schrittmotor ausgebildet sein. Ein Neigungssensor (33) ist mit einer Steuereinrichtung (31) verbunden, die den Elektromotor (5) in Abhängigkeit von einer seitlichen Neigung des Fahrzeuges bzw. dessen Karosserie (24) steuert. Die Steuereinrichtung (31) ist als ein auf einem Mikrocontroller basierendes System ausgebildet, das Signaleingänge, beispielsweise den Signaleingang (32) eines Neigungssensors (33) oder eines von einem Fahrzeugführer gesetzten Steuersignals (34), über Algorithmen verknüpft und die Grundlichtverteilungen (36, 37, 38) kombiniert. Dabei wird der Reflektor (2) so verschwenkt, daß er seine horizontale Ausrichtung beibehält und trotz Fahrzeugneigung auf der Straße eine unveränderte Lichtverteilung bestehen bleibt. Der Reflektor (2) ist als sogenannter Freiflächenreflektor ausgebildet, d. h., Schnitte in vertikaler oder horizontaler Richtung durch den Reflektor (2) sind nicht notwendigerweise paraboloide oder elipsoide Schnitte. Die Lichtflächen (9, 14, 15) können zur Erzeugung der gewünschten Lichtverteilung frei gestaltet werden.

Grundsätzlich ist es auch möglich, bekannte kreisrunde oder auch in vertikaler Richtung oben und unten abgeflachte Fahrzeugscheinwerfer um eine Mittelachse schwenkbar zu lagern und sie in Abhängigkeit von einer seitlichen Neigung eines Fahrzeuges zu verschwenken.

## Patentansprüche

1. Fahrzeugscheinwerfer mit einem Reflektor (2), der in vertikaler Richtung in einen oberen Bereich (6), einen mittleren Bereich (7) und einen unteren Bereich (8) aufgeteilt ist, dadurch gekennzeichnet, daß der obere Bereich (6) als Abblendlichtfläche (9) ausgebildet ist, die ein erstes Zentrum (10) aufweist, durch das die Längsachse einer ersten Lampe (3) verläuft, daß der mittlere Bereich (7) als Nebellichtfläche (14) und der untere Bereich (8) als Fernlichtfläche (15) ausgebildet ist, und daß die Nebellichtfläche (14) und die Fernlichtfläche (15) ein gemeinsames zweites Zentrum (16) aufweisen, durch das die Längsachse einer zweiten Lampe (4) verläuft.

2. Fahrzeugscheinwerfer nach Anspruch 1, dadurch gekennzeichnet, daß die Abblendlichtfläche (9) so ausgebildet ist, daß eine Abblendlichtverteilung (36) eine horizontale Streubreite (13) von etwa ± 20 bis 25 Grad aufweist.

3. Fahrzeugscheinwerfer nach Anspruch 1 oder 2, dadurch gekennzeichnet, daß die Nebellichtfläche (14) so ausgebildet ist, daß eine Nebellichtverteilung (37) eine horizontale Streubreite (18) von etwa ± 45 bis 50 Grad aufweist.

4. Fahrzeugscheinwerfer nach einem der Ansprüche 1 bis 3, dadurch gekennzeichnet, daß die Fernlichtfläche (15) so ausgebildet ist, daß eine Fernlichtverteilung (38) eine horizontale Streubreite (19) von etwa ± 35 bis 45 Grad aufweist.

5. Fahrzeugscheinwerfer nach Anspruch 4, dadurch gekennzeichnet, daß die Fernlichtverteilung (38) ein enges Maximum im Horizontal / Vertikal-Schnitt von etwa ± 5 Grad aufweist.

6. Fahrzeugscheinwerfer nach einem der Ansprüche 1 bis 5, dadurch gekennzeichnet, daß die Fernlichtverteilung (38) auf die Abblendlichtverteilung (36) aufschaltbar ist.

7. Fahrzeugscheinwerfer nach einem der Ansprüche 1 bis 6, dadurch gekennzeichnet, daß die Nebellichtverteilung auf die Abblendlichtverteilung (36) aufschaltbar ist.

8. Fahrzeugscheinwerfer nach einem der Ansprüche 1 bis 7, dadurch gekennzeichnet, daß die erste Lampe (3) eine Abblendlichtwendel aufweist, und daß die zweite Lampe (4) eine für Nebellicht nutzbare zweite Abblendlichtwendel sowie eine Fernlichtwendel aufweist.

9. Fahrzeugscheinwerfer nach einem der Ansprüche 1 bis 8, dadurch gekennzeichnet, daß die erste Lampe (3) als H7-Lampe und die zweite Lampe (4) als H4-Lampe ausgebildet ist.

10. Fahrzeugscheinwerfer nach einem der Ansprüche 1 bis 9, dadurch gekennzeichnet, daß die erste Lampe (3) und die zweite Lampe (4) in vertikaler Richtung von einer Mittelachse (25) des Fahrzeugscheinwerfers (1) etwa den gleichen Abstand aufweisen.

11. Fahrzeugscheinwerfer nach einem der Ansprüche 1 bis 10, dadurch gekennzeichnet, daß der Reflektor kreisrund ausgebildet ist.

12. Fahrzeugscheinwerfer nach einem der Ansprüche 1 bis 11, dadurch gekennzeichnet, daß der Reflektor (2) um seine Mittelachse (25) schwenkbar gelagert ist.

13. Fahrzeugscheinwerfer nach Anspruch 12, dadurch gekennzeichnet, daß der Reflektor (2) durch einen Elektromotor (5) schwenkbar ist.

14. Fahrzeugscheinwerfer nach Anspruch 13, dadurch gekennzeichnet, daß der Elektromotor (5) über ein Getriebe (27) mit dem Reflektor (2) verbunden ist.

15. Fahrzeugscheinwerfer nach einem der Ansprüche 12 bis 14, dadurch gekennzeichnet, daß der Reflektor (2) in Abhängigkeit von einer seitlichen Neigung eines Fahrzeuges schwenkbar ist.

16. Fahrzeugscheinwerfer nach Anspruch 15, dadurch gekennzeichnet, daß der Elektromotor (5) von einer mit einem Neigungssensor verbundenen Steuereinrichtung so gesteuert wird, daß bei seitlicher Neigung des Fahrzeuges der Reflektor (2) seine horizontale Ausrichtung beibehält.

## Claims

1. A vehicle headlamp comprising a reflector (2) which is divided vertically into an upper region (6), a middle region (7) and a lower region (8), characterised in that the upper region (6) is constructed as a dipped beam area (9) which comprises a first centre (10) through which the longitudinal axis of a first lamp (3) passes, that the middle region (7) is constructed as a fog light area (14) and the lower region (8) is constructed as a main beam area (15), and that the fog light area (14) and the main beam area (15) have a common second centre (16) through which longitudinal axis of a second lamp (4) passes.

2. A vehicle headlamp according to claim 1, characterised in that the dipped beam area (9) is constructed so that a dipped beam distribution (36) has a horizontal spread (13) of about ± 20 to 25 degrees.

3. A vehicle headlamp according to claims 1 or 2, characterised in that the fog light area (14) is constructed so that a fog light distribution (37) has a horizontal spread (18) of about ± 45 to 50 degrees.

4. A vehicle headlamp according to any one of claims 1 to 3, characterised in that the main beam area (15) is constructed so that a main beam distribution (38) has a horizontal spread (19) of about ± 35 to 45 degrees.

5. A vehicle headlamp according to claim 4, characterised in that the main beam distribution (38) has a narrow maximum of about ± 5 degrees in horizontal / vertical section.

6. A vehicle headlamp according to any one of claims 1 to 5, characterised in that the main beam distribution (38) can be combined with the dipped beam distribution (36).

7. A vehicle headlamp according to any one of claims 1 to 6, characterised in that the fog light distribution can be combined with the dipped beam distribution (36).

8. A vehicle headlamp according to any one of claims 1 to 7, characterised in that the first lamp (3) comprises a dipped beam spiral-wound filament, and that the second lamp (4) comprises a second dipped beam spiral-wound filament which can be used as a fog light, as well as a main beam spiral-wound filament.

9. A vehicle headlamp according to any one of claims 1 to 8, characterised in that the first lamp (3) is constructed as an H7 lamp and the second lamp (4) is constructed as an H4 lamp.

10. A vehicle headlamp according to any one of claims 1 to 9, characterised in that the first lamp (3) and the second lamp (4) are at about the same distance vertically from a centre line (25) of the vehicle headlamp (1).

11. A vehicle headlamp according to any one of claims 1 to 10, characterised in that the reflector is of spherical construction.

12. A vehicle headlamp according to any one of claims 1 to 11, characterised in that the reflector (2) is swivel-mounted about its centre line (25).

13. A vehicle headlamp according to claim 12, characterised in that the reflector (2) can be swivelled by an electric motor (5).

14. A vehicle headlamp according to claim 13, characterised in that the electric motor (5) is connected to the reflector (2) via gearing (27).

15. A vehicle headlamp according to any one of claims 12 to 14, characterised in that the reflector (2) can be swivelled depending on the lateral inclination of a vehicle.

16. A vehicle headlamp according to claim 15, characterised in that the electric motor (5) is controlled by a control device which is connected to an inclination sensor so that when there is a lateral inclination of the vehicle the reflector (2) maintains its horizontal alignment.

## Revendications

1. Phare de véhicule comportant un réflecteur (2), qui est divisé, dans une direction verticale, en une partie supérieure (6), une partie médiane (7) et une partie inférieure (8), caractérisé en ce que la partie supérieure (6) est agencée sous la forme d'une surface (9) délivrant une lumière de croisement et qui possède un premier centre (10) par lequel passe l'axe longitudinal d'une première lampe (3), que la partie médiane (7) est réalisée sous la forme d'une surface (14) délivrant une lumière anti-brouillard et que la partie inférieure (8) est agencée sous la forme d'une surface (15) délivrant une lumière de longue portée, et que la surface (14) délivrant une lumière anti-brouillard et la surface (14) délivrant une lumière de longue portée possèdent un second centre commun (16), par lequel passe l'axe longitudinal d'une seconde lampe (4).

2. Phare de véhicule selon la revendication 1, caractérisé en ce que la surface (9) délivrant une lumière de croisement est agencée de telle sorte qu'une distribution (36) de la lumière de croisement possède une largeur horizontale de dispersion (13) d'environ ± 20 à 25 degrés.

3. Phare de véhicule selon la revendication 2, caractérisé en ce que la surface (14) produisant une lumière anti-brouillard est agencée de telle sorte qu'une distribution (37) de la lumière anti-brouillard possède une largeur de dispersion horizontale (18) d'environ ± 45 à 50 degrés.

4. Phare de véhicule selon l'une des revendications 1 à 3, caractérisé en ce que la surface (15) délivrant une lumière de longue portée est agencée de telle sorte qu'une distribution (38) de la lumière de longue portée possède une largeur de dispersion horizontale (19) d'environ ± 35 à 45 degrés.

5. Phare de véhicule selon la revendication 4, caractérisé en ce que la distribution (38) de la lumière de longue portée possède un maximum étroit, en coupe horizontale/verticale, d'environ ± 5 degrés.

6. Phare de véhicule selon l'une des revendications 1 à 5, caractérisé en ce que la distribution (38) de la lumière de longue portée peut être superposée à la distribution (36) de la lumière de croisement.

7. Phare de véhicule selon l'une des revendications 1 à 6, caractérisé en ce que la distribution de la lumière anti-brouillard peut être superposée à la distribution (36) de la lumière de croisement.

8. Phare de véhicule selon l'une des revendications 1 à 7, caractérisé en ce que la première lampe (3) possède un filament pour la lumière de croisement et que la seconde lampe (4) possède un second filament pour la lumière de croisement, utilisable pour la lumière anti-brouillard, ainsi qu'un filament pour la lumière de longue portée.

9. Phare de véhicule selon l'une des revendications 1 à 8, caractérisé en ce que la première lampe (3) est une lampe H7 et la seconde lampe (4) est une lampe H4.

10. Phare de véhicule selon l'une des revendications 1 à 9, caractérisé en ce que la première lampe (3) et la seconde lampe (4) sont situées approximativement à la même distance, dans une direction verticale, de l'axe médian (25) du phare (1) du véhicule.

11. Phare de véhicule selon l'une des revendications 1 à 10, caractérisé en ce que le réflecteur possède une forme circulaire.

12. Phare de véhicule selon l'une des revendications 1 à 11, caractérisé en ce que le réflecteur (2) est monté de manière à pouvoir pivoter autour de son axe médian (25).

13. Phare de véhicule selon la revendication 12, caractérisé en ce que le réflecteur (2) peut pivoter sous l'action d'un moteur électrique (5).

14. Phare de véhicule selon la revendication 13, caractérisé en ce que le moteur électrique (5) est relié par un mécanisme de transmission (27) au réflecteur (2).

15. Phare de véhicule selon l'une des revendications 12 à 14, caractérisé en ce que le réflecteur (2) peut pivoter en fonction d'une inclinaison latérale du véhicule.

16. Phare de véhicule selon la revendication 15, caractérisé en ce que le moteur électrique (5) est commandé par un dispositif de commande relié à un capteur d'inclinaison de telle sorte que, lors d'une inclinaison latérale du véhicule, le réflecteur (2) conserve son orientation horizontale.
